(19) Europäisches Patentamt
European Patent Office
Office européen des brevets

(11) EP 0 863 937 B1

(12) **FASCICULE DE BREVET EUROPEEN**

(45) Date de publication et mention de la délivrance du brevet:
**25.09.2002 Bulletin 2002/39**

(21) Numéro de dépôt: **96934728.5**

(22) Date de dépôt: **16.10.1996**

(51) Int Cl.[7]: **C08J 5/22**, B01D 61/44

(86) Numéro de dépôt international:
**PCT/EP96/04516**

(87) Numéro de publication internationale:
**WO 97/015612 (01.05.1997 Gazette 1997/19)**

(54) **PROCEDE DE FABRICATION D'UNE MEMBRANE AMBIPOLAIRE**

VERFAHREN ZUR HERSTELLUNG EINER AMBIPOLARMEMBRAN

METHOD FOR MAKING AN AMBIPOLAR MEMBRANE

(84) Etats contractants désignés:
**BE DE FR GB IT SE**

(30) Priorité: **24.10.1995 FR 9512619**

(43) Date de publication de la demande:
**16.09.1998 Bulletin 1998/38**

(73) Titulaire: **SOLVAY (Société Anonyme)**
**1050 Bruxelles (BE)**

(72) Inventeur: **BRUNEA, John, A.**
**F-39500 Tavaux (FR)**

(74) Mandataire: **Dufrasne, Eugène et al**
**Solvay S.A.,**
**Département Propriété Industrielle,**
**310, rue de Ransbeek**
**1120 Bruxelles (BE)**

(56) Documents cités:
**EP-A- 0 004 029**
**EP-A- 0 140 544**
**WO-A-94/19399**
**CH-A- 447 114**
**FR-A- 2 571 977**
**FR-A- 2 641 539**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 863 937 B1

## Description

L'invention concerne les membranes échangeuses d'ions, plus particulièrement les membranes ambipolaires comprenant des groupes anioniques et des groupes cationiques.

Les membranes échangeuses d'ions occupent une place importante dans les technologies de séparation, de purification et d'enrichissement des solutions aqueuses et organiques. On les utilise notamment pour la concentration d'acides ou de bases au moyen des techniques de dialyse, d'électrodialyse et d'électrolyse.

L'invention concerne plus spécialement les membranes ambipolaires, qui sont des membranes comprenant au moins deux couches échangeuses d'ions, juxtaposées le long d'une interface commune, l'une des couches étant une couche échangeuse de cations et l'autre couche étant une couche échangeuse d'anions.

L'invention concerne en particulier un procédé pour la fabrication d'une membrane ambipolaire, comprenant la fixation par greffage, à une feuille en un matériau polymère, de sites cationiques fixes et de sites anioniques fixes.

Dans la demande internationale WO 94/19399 on décrit un procédé de fabrication d'une membrane ambipolaire, selon lequel on met en oeuvre une feuille en polymère fluoré greffé de styrène réticulé par du divinylbenzène, on traite la feuille, sur ses deux faces, avec une solution d'acide chlorosulfonique de manière à réaliser une chlorosulfonation du styrène, on soumet une face de la feuille chlorosulfonée, successivement à une amination et à une quaternisation de l'amine et on hydrolyse l'autre face de la feuille. La membrane ambipolaire ainsi obtenue porte, sur une face, des groupes fonctionnels cationiques dérivés d'acide sulfonique et, sur l'autre face, des sites anioniques d'ammonium quaternaire; elle constitue de la sorte une membrane bipolaire. Dans une variante de ce procédé connu, après le traitement avec l'acide chlorosulfonique, les deux faces de la feuille chlorosulfonée sont soumises au traitement d'amination et de quaternisation, l'hydrolyse étant opérée dans la zone centrale de la feuille. La membrane ambipolaire ainsi obtenue comprend une couche interne cationique, prise en sandwich entre deux couches superficielles anioniques.

Le procédé connu qui vient d'être décrit implique de mettre en oeuvre une feuille polymère qui est greffée de styrène sur la totalité de son épaisseur et de soumettre la totalité de la feuille à une chlorosulfonation, avant de former les sites anioniques d'ammonium quaternaire et les sites cationiques sulfonés. De ce fait, dans ce procédé connu, les propriétés de la couche cationique et celles de la couche anionique (en particulier leur capacité d'échange et leur perméabilité aux électrolytes) sont interdépendantes. Cette particularité du procédé connu a pour conséquence que les propriétés d'une des couches ioniques de la membrane ambipolaire sont impérativement conditionnées par le choix des propriétés de l'autre couche ionique, ce qui constitue un désavantage.

L'invention remédie à ce désavantage du procédé connu qui vient d'être décrit, en fournissant un procédé pour la fabrication de membranes ambipolaires, qui permet de régler les propriétés de la couche anionique indépendamment de celles de la couche cationique, et dont la mise en oeuvre est par ailleurs plus simple.

L'invention concerne dès lors un procédé de fabrication d'une membrane ambipolaire, selon lequel on greffe, sur une feuille en un matériau polymère, un monomère comprenant au moins un radical aryle auquel on fixe des groupements fonctionnels dérivés d'acide sulfonique, carboxylique ou phosphonique, et on fixe des radicaux d'ammonium quaternaire à la feuille polymère, le procédé se caractérisant en ce qu'on greffe le monomère comprenant un radical aryle, sur une fraction de l'épaisseur de la feuille, et en ce que, pour fixer les radicaux d'ammonium quaternaire à la feuille polymère, on greffe, sur une autre fraction de l'épaisseur de ladite feuille, un monomère sélectionné parmi les halogénoalkylstyrènes et les composés hétérocycliques azotés comprenant un radical alcényle, que l'on traite ensuite pour y former des radicaux d'ammonium quaternaire.

Le matériau polymère de la feuille n'est pas critique pour l'exécution du procédé selon l'invention. Des exemples de matériaux polymères entrant dans le cadre de l'invention comprennent les polymères dérivés d'oléfines (par exemple le polyéthylène, le polypropylène et les copolymères de l'éthylène et du propylène), le polychlorure de vinyle, le polyfluorure de vinylidène et les polymères et copolymères du tétrafluoroéthylène (par exemple le polytétrafluoroéthylène, les copolymères de l'éthylène et du tétrafluoroéthylène, les copolymères du propylène et du tétrafluoroéthylène, les copolymères du tétrafluoroéthylène et d'éther perfluorovinylique et les copolymères de l'hexafluoropropylène et du tétrafluoroéthylène). De manière générale, le choix du matériau polymère de la feuille est dicté par la destination de la membrane ambipolaire. Le matériau polymère de la feuille doit en effet, de préférence, être inerte vis-à-vis de l'environnement physicochimique dans les applications auxquelles on destine la membrane ambipolaire

L'épaisseur de la feuille polymère n'est pas critique pour l'exécution du procédé selon l'invention. De manière générale, l'épaisseur de la feuille est imposée par la recherche d'un compromis entre une faible résistance électrique (favorisée par les faibles épaisseurs) et une résistance mécanique suffisante. En pratique, des épaisseurs de l'ordre d'environ 10 à 500 μm conviennent dans la majorité des cas, les épaisseurs de l'ordre de 25 à 200 μm étant les plus fréquentes.

Le monomère comprenant un radical aryle doit être choisi parmi ceux susceptibles d'être greffés sur le matériau polymère de la feuille et de recevoir des groupements fonctionnels cationiques, dérivés d'acide sulfonique, d'acide carboxylique ou d'acide phosphonique. Pour une raison de simplicité, le monomère comprenant un radical aryle sera par la suite désigné "monomère cationique". Le monomère cationique est avantageusement sélectionné parmi les alcénylbenzènes de formule générale

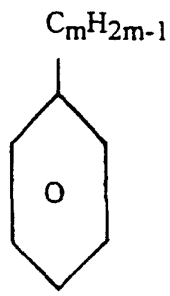

et les (polyalcényl)benzènes de formule générale

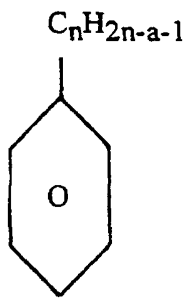

où m et n désignent des nombres entiers au moins égaux à 2, de préférence de 2 à 6, et a est un nombre entier inférieur à n, désignant le nombre de doubles liaisons du radical alcényl du (polyalcényl)benzène.

Les alcénylbenzènes sont préférés, particulièrement ceux de formule générale

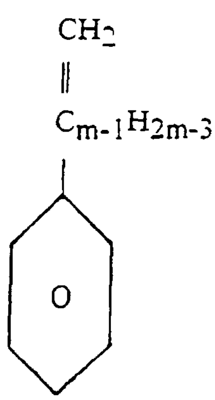

Le styrène est spécialement préféré.

Le greffage du monomère cationique est avantageusement accompagné d'une réticulation de celuici. La réticulation peut être réalisée par tout moyen approprié, par exemple par voie chimique ou radiochimique. On préfère mettre en oeuvre une réticulation chimique, le greffage du monomère cationique étant alors effectué en présence d'un agent de réticulation. Dans le cas où le monomère sélectionné comprend du styrène, l'agent de réticulation utilisé peut avantageusement être du divinylbenzène.

Pour former les sites cationiques fixes de la membrane ambipolaire, on fixe des groupements fonctionnels dérivés d'acide sulfonique, d'acide carboxylique ou d'acide phosphonique au radical aryle du monomère cationique, par tout moyen approprié. Un moyen connu, recommandé dans le cadre de l'invention consiste à traiter la feuille polymère, greffée du monomère cationique, dans un bain d'acide sulfonique, carboxylique ou phosphonique, ou comprenant un dérivé de cet acide.

Selon l'invention, le monomère cationique est greffé sur une fraction seulement de l'épaisseur de la feuille et les radicaux d'ammonium quaternaire sont fixés dans une autre fraction de l'épaisseur de la feuille. La fraction de la feuille à laquelle le monomère cationique est greffé est appelée à constituer une couche cationique de la membrane ambipolaire, l'autre fraction étant appelée à constituer la couche anionique de la membrane ambipolaire. L'épaisseur de chacune de ces deux couches ioniques, relativement à l'épaisseur totale de la feuille va dépendre des propriétés recherchées pour la membrane ambipolaire et elle peut être aisément déterminée dans chaque cas particulier en fonction de la destination de la membrane. En pratique, l'épaisseur globale des deux couches ioniques égale la totalité de l'épaisseur de la membrane. D'une manière générale, l'épaisseur globale des deux couches ioniques est supérieure à 50 % (de préférence au moins égale à 95 %) de l'épaisseur totale de la membrane ambipolaire. L'épaisseur de la couche cationique de la membrane ambipolaire représente de 25 à 75 % de l'épaisseur totale de la membrane, l'épaisseur de la couche anionique représentant de 75 à 25 % de ladite épaisseur La membrane ambipolaire à fabriquer peut comprendre une seule couche cationique et une seule couche anionique, qui présentent une interface commune à l'intérieur de la membrane. En variante, la membrane ambipolaire peut comprendre deux couches cationiques ou davantage, alternant avec une ou plusieurs couches anioniques, et vice-versa. Un exemple d'une telle membrane ambipolaire comprend une seule couche cationique prise en sandwich entre deux couches anioniques. Un autre exemple de membrane ambipolaire de ce type comprend une couche anionique unique, prise en sandwich entre deux couches cationiques

Conformément à l'invention, pour fixer les radicaux d'ammonium quaternaire sur la fraction correspondante de l'épaisseur de la feuille, on greffe sur celleci un monomère sélectionné parmi les halogénoalkylstyrènes et les composés hétérocycliques azotés comprenant un radical alcényle, et on traite ensuite ce monomère de manière adéquate pour y former les radicaux

d'ammonium quaternaire. Pour une raison de simplicité, l'expression "monomère anionique" sera dorénavant utilisée pour désigner le monomère susdit sélectionné parmi les halogénoalkylstyrènes et les composés hétérocycliques azotés comprenant un radical alcényle

Le greffage du monomère anionique est avantageusement accompagné d'une réticulation de celuici. La réticulation peut être réalisée par tout moyen approprié, par exemple par voie chimique ou radiochimique. On préfère mettre en oeuvre une réticulation chimique, le greffage du monomère anionique étant alors effectué en présence d'un agent de réticulation. Dans le cas où le monomère sélectionné comprend un halogénoalkylstyrène, l'agent de réticuiation utilisé peut avantageusement être du divinylbenzène.

Dans le procédé selon l'invention le greffage du monomère cationique et le greffage du monomère anionique à la feuille polymère peuvent être opérés par tous moyens adéquats.

Selon une forme de réalisation avantageuse du procédé suivant l'invention, on met en oeuvre une méthode de greffage radiochimique. A cet effet, pour greffer le monomère cationique (respectivement anionique), on soumet la feuille polymère à des radiations ionisantes en milieu oxygéné (par exemple en présence d'air) et on la met ensuite en présence d'une solution organique dudit monomère. Dans cette forme de réalisation du procédé selon l'invention, le traitement de la feuille avec des radiations ionisantes a pour fonction d'y engendrer des radicaux libres qui, par réaction avec l'oxygène du milieu oxygéné, sont convertis en (hydro) peroxydes qui réagissent ensuite avec le monomère. Des informations concernant la méthode de greffage radiochimique sont accessibles notamment dans J. of Membrane Science, 67 (1992) pages 263-271.

Le taux de greffage du monomère cationique et le taux de greffage du monomère anionique vont dépendre des propriétés recherchées pour la membrane ambipolaire. De manière générale, le taux de greffage optimum résulte d'un compromis entre la recherche d'une capacité d'échange ionique élevée (favorisée par un taux de greffage élevé) et d'une faible perméabilité aux liquides (favorisée par un faible taux de greffage). Dans ce qui précède, le taux de greffage (en pour cent) est exprimé par l'expression

$$t = \frac{P - P^o}{P^o} \times 100,$$

où $P^\circ$ et P désignent la masse de la feuille respectivement avant et après le greffage.

La capacité d'échange ionique est la quantité de groupes fonctionnels ioniques de la membrane (exprimée en milliéquivalents) par unité de masse de la membrane.

Le taux de greffage va dès lors dépendre de la destination de la membrane ambipolaire. A titre d'exemple, on réalise généralement des taux de greffage globaux (correspondant à la somme des sites cationiques et des sites anioniques) de l'ordre d'environ 20 à 80 %, les taux de greffage les plus généralement réalisés se situant entre 20 et 50 %.

Le traitement à mettre en oeuvre pour former les radicaux d'ammonium quaternaire va dépendre du monomère anionique que l'on a sélectionné et peut être aisément défini dans chaque cas particulier.

Dans une forme d'exécution particulière du procédé selon l'invention, le monomère anionique sélectionné comprend un halogénoalkylstyrène que l'on traite avec une amine pour former les radicaux d'ammonium quaternaire. Dans cette forme d'exécution du procédé selon l'invention, l'halogénoalkylstyrène est avantageusement sélectionné parmi les chloroalkylstyrènes, le chlorométhylstyrène étant préféré. L'amine est avantageusement sélectionnée parmi les amines tertiaires. Les trialkylamines sont spécialement recommandée, la triméthylamine étant préférée. Dans cette forme d'exécution du procédé selon l'invention, le traitement avec l'amine peut comprendre une immersion de la feuille dans un bain de l'amine, ou un badigeonnage de la surface de la membrane avec l'amine mise en oeuvre à l'état liquide. L'amine peut être mise en oeuvre à l'état pur ou, de préférence, en solution dans un solvant adéquat, de préférence de l'eau, lorsque l'amine sélectionnée est hydrosoluble.

Dans une autre forme d'exécution du procédé selon l'invention, le monomère anionique sélectionné comprend un composé hétérocyclique azoté comprenant un radical alcényle et on soumet ce composé à une quaternisation. Dans cette forme d'exécution du procédé selon l'invention, le composé hétérocyclique azoté comprenant un radical alcényle est avantageusement sélectionné parmi les dérivés de la pyridine, en particulier parmi les vinyl-pyridines, la vinyl-4-pyridine s'étant révélée un composé adéquat. Pour réaliser la quaternisation du composé hétérocyclique azoté, on peut traiter celui-ci avec un acide. Les hydracides conviennent généralement bien, particulièrement l'acide chlorhydrique.

Le procédé selon l'invention présente la particularité que la formation de la ou de chaque couche cationique de la membrane ambipolaire est réalisée indépendamment de la formation de la ou de chaque couche anionique de la membrane. En particulier, dans le procédé selon l'invention, le greffage du monomère cationique et le greffage du monomère anionique sont indépendants l'un de l'autre. Le procédé selon l'invention permet notamment de réaliser, en cas de besoin, des taux de greffage et des taux de réticulation qui sont différents pour le monomère cationique et pour le monomère anionique. Cette particularité du procédé selon l'invention présente l'avantage de permettre d'adopter des taux de greffage et de réticulation optimum à la fois pour le monomère cationique et pour le monomère anionique. Le procédé selon l'invention permet ainsi la fabrication de membranes ambipolaires dans lesquelles

les capacités d'échange des couches cationiques et anioniques, respectivement, peuvent être adaptées de manière optimum à la destination des membranes.

Comparé au procédé connu décrit plus haut, le procédé selon l'invention présente l'avantage supplémentaire d'être d'exécution plus simple.

La membrane ambipolaire, susceptible d'être obtenue au moyen du procédé selon l'invention, peut comprendre une feuille en un matériau polymère auquel sont greffés, d'une part, des groupes anioniques fixes de formule générale

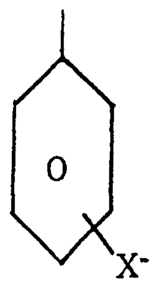

dans laquelle X désigne un radical sulfoné, carboxylé ou phosphoné, et, d'autre part, des groupes cationiques fixes d'ammonium quaternaire, sélectionnés parmi les composés de formule générale

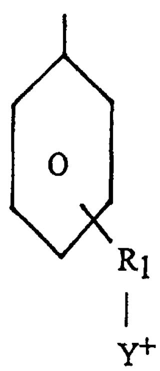

et les composés hétérocycliques azotés de formule générale

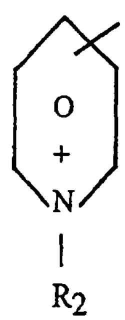

où $R_1$ désigne un radical alkyle, Y désigne un radical d'ammonium quaternaire et $R_2$ désigne un atome d'hydrogène ou un radical alkyle.

Dans cette membrane, le choix du radical X parmi les radicaux sulfoné, carboxylé ou phosphoné dépend de la destination de la membrane ambipolaire. Il est avantageusement un radical sulfoné $SO_3^-$.

Selon une première forme de réalisation de cette membrane, les groupes cationiques d'ammonium quaternaire sont des composés de formule générale

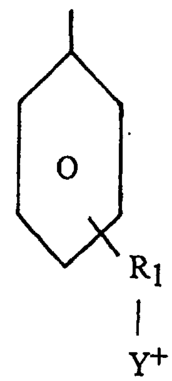

dans laquelle $R_1$ désigne un radical alkylène, de préférence méthylène, et Y désigne un radical d'ammonium quaternaire.

Dans une variante avantageuse de cette forme de réalisation de la membrane, le radical d'ammonium quaternaire Y est un reste de formule générale

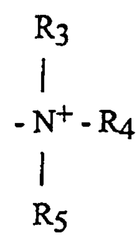

dans laquelle $R_3$, $R_4$ et $R_5$ désignent des atomes d'hydrogène ou des radicaux alkyle, de préférence méthyle.

Dans une autre variante de la première forme de réalisation susdite de la membrane, le radical d'ammonium quaternaire Y est un reste de formule générale

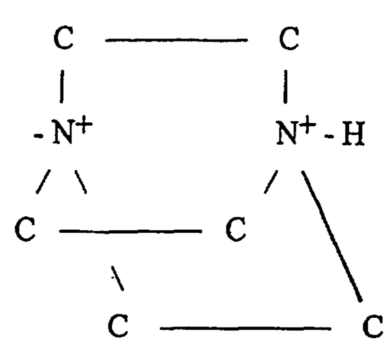

Selon une seconde forme de réalisation de la membrane, les groupes cationiques d'ammonium quaternaire sont des composés hétérocycliques azotés de formule générale

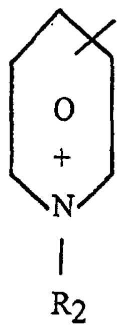

dans laquelle $R_2$ désigne un atome d'hydrogène ou un radical alkyle, avantageusement méthyle. Dans cette forme de réalisation, $R_2$ désigne de préférence un atome d'hydrogène.

Dans cette membrane ambipolaire, les groupes anioniques fixes et les groupes cationiques fixes d'ammonium quaternaire peuvent être greffés au matériau polymère de la feuille par l'intermédiaire de chaînes alkylène. Ces chaînes alkyle comprennent avantageusement des chaînes méthylène.

Dans cette membrane, les groupes cationiques, d'une part, et les groupes anioniques, d'autre part, sont répartis en couches distinctes présentant des interfaces communes.

Selon une forme de réalisation particulière, la membrane ambipolaire est une membrane bipolaire et comprend une seule couche cationique, juxtaposée à une seule couche anionique le long d'une interface commune. Une membrane bipolaire de ce type trouve une application intéressante dans les procédés d'électrodialyse pour la fabrication de solutions aqueuses d'hydroxyde de métal alcalin, tels que ceux décrits notamment dans la demande de brevet européen EP-A-659 467 (SOLVAY). Pour cette application particulière, le matériau polymère de la feuille de la membrane comprend de préférence un polymère fluoré, par exemple du polyfluorure de vinylidène ou du polytétrafluoroéthylène.

Selon une autre forme de réalisation, la membrane ambipolaire comprend deux couches de groupes anioniques et une couche de groupes cationiques prise en sandwich entre les deux couches anioniques. La membrane ambipolaire selon cette forme de réalisation trouve une application en épuration par dialyse ou électrodialyse, de solutions acides (aqueuses ou organiques), contaminées par des cations polyvalents.

Selon une forme de réalisation supplémentaire, la membrane ambipolaire comprend deux couches de groupes cationiques et une couche de groupes anioniques prise en sandwich entre les deux couches cationiques. La membrane ambipolaire selon cette forme de réalisation trouve une application en épuration par dialyse ou électrodialyse, de solutions basiques, contaminées par des anions polyvalents.

Des particularités et détails de l'invention vont ressortir de la description suivante, en référence à la figure unique du dessin annexé, qui montre schématiquement, en section transversale verticale et à grande échelle, une membrane ambipolaire susceptible d'être obtenue au moyen du procédé selon l'invention.

La membrane ambipolaire représentée à la figure comprend une feuille en copolymère de l'éthylène et du tétrafluoroéthylène de 100 μm d'épaisseur, désignée de manière générale par la notation de référence 1. La feuille 1 comprend une couche cationique médiane 2, prise en sandwich entre deux couches anioniques superficielles 3 et 4. Les couches cationique 2 et anioniques 3 et 4 présentent des interfaces 5 et 6 sensiblement parallèles aux faces 7 et 8 de la feuille 1.

La membrane représentée au dessin présente la propriété d'être sélectivement perméable aux protons et imperméable aux cations de valence supérieure à 1, lorsqu'elle est utilisée dans un procédé de dialyse ou d'électrodialyse de solutions acides.

Les exemples suivants servent à illustrer le procédé selon l'invention, appliqué à la fabrication de quelques membranes conformes à celle représentée au dessin.

<u>Exemple 1.</u>

Au moyen du procédé selon l'invention, on a fabriqué une membrane ambipolaire du type de celle schématisée au dessin, au départ d'une feuille en copolymère de l'éthylène et du tétrafluoroéthylène de 100 μm d'épaisseur.

A cet effet, dans une première étape du procédé, on a soumis la feuille à un rayonnement bêta de 60 kGy pour y engendrer des radicaux libres. L'irradiation a été effectuée à l'air.

Ensuite, dans une deuxième étape du procédé, on a immergé la feuille irradiée dans un bain d'une solution de chlorométhylstyrène, comprenant 30 % en poids de chlorométhylstyrène et 70 % en poids d'éthanol. Du divinylbenzène a été incorporé au bain à titre d'agent de réticulation du chlorométhylstyrène. La température du bain a été fixée à 80 °C et l'immersion a duré 60 minutes. On a de la sorte obtenu le greffage de chlorométhylstyrène dans les deux couches superficielles 3 et 4 de la feuille 1, avec un taux de greffage de 15 %.

La feuille greffée de chlorométhylstyrène a été extraite du bain, puis, dans une troisième étape du procédé, on l'a immergée dans un bain d'une solution de styrène, comprenant 30 % en poids de styrène et 70 % en poids d'éthanol. Du divinylbenzène a été incorporé au bain à titre d'agent de réticulation du styrène La température du bain a été fixée à 80 °C et l'immersion a été

de 15 heures. Il en est résulté un greffage de styrène dans la couche médiane 2 de la feuille 1, avec un taux de greffage de 15 %.

Dans une quatrième étape du procédé, on a introduit des sites anioniques dans les couches superficielles 3 et 4 de la feuille 1. A cet effet, on a immergé la feuille dans une solution aqueuse de triméthylamine, pour fixer des groupes d'ammonium quaternaire sur les radicaux chlorométhyle de la membrane.

Pour introduire des sites cationiques dans la couche médiane 2 de la feuille 1, on a immergé la feuille dans un bain d'acide chlorosulfonique, ce qui a eu pour résultat de fixer des groupes chlorosulfonés au styrène. Après extraction de la feuille du bain d'acide chlorosulfonique, on l'a immergée dans un bain d'une solution aqueuse d'hydroxyde de sodium à 60 °C, de manière à hydrolyser les groupes chlorosulfoniques et les convertir en sites cationiques sulfoniques.

Sur la membrane ainsi obtenue, on a relevé les propriétés électrochimiques suivantes

. capacité d'échange ionique : 0,7 méq/g;
. résistance électrique (dans une solution aqueuse d'acide chlorhydrique 0,1N) 3,6 $\Omega.cm^2$.

Pour mesurer la sélectivité de la membrane ainsi obtenue, aux protons, on a mesuré les nombres de transport respectifs du nickel et des protons à travers la membrane immergée dans une solution aqueuse d'acide sulfurique 1N, contaminée par du sulfate de nickel (0,5 mole par litre), au moyen de la méthode de HITTORF. A cet effet, on a disposé la membrane dans une cellule d'électrolyse, de manière à former dans celle-ci une chambre cathodique contenant une cathode et une chambre anodique, contenant une anode. On a introduit 200 $cm^3$ de la solution aqueuse d'acide sulfurique et de sulfate de nickel dans la chambre anodique de la cellule et on introduit 50 $cm^3$ d'une solution aqueuse d'acide sulfurique 2N, non contaminée, dans la chambre cathodique de la cellule. L'anode et la cathode ont été connectées respectivement aux bornes positive et négative d'une source de courant continu, de manière à réaliser une densité de courant de 30 mA par $cm^2$ d'aire de la membrane ambipolaire. A l'issue de l'essai, qui a duré 90 minutes, on a relevé les nombres de transport du nickel et des protons, le nombre de transport d'un cation étant défini par la relation

$$t = \frac{n.J.F}{I},$$

où n désigne la valence du cation,
J désigne le flux des cations considérés à travers la membrane (exprimé en moles/s $cm^2$),
F désigne la constante de Faraday,
I désigne la densité de courant appliquée (30 mA/$cm^2$, dans l'exemple). On a relevé les valeurs suivantes :

Nombre de transport du nickel : 0,004,
Nombre de transport des protons : 0,95.

Exemple 2

On a répété l'essai de l'exemple 1, en adaptant les paramètres opératoires de manière à réaliser un taux de greffage du chlorométhylstyrène de 15 % à la deuxième étape et un taux de greffage du styrène de 65 % à la troisième étape.

La membrane obtenue a présenté les propriétés suivantes, mesurées dans les mêmes conditions expérimentales qu'à l'exemple 1 :

. capacité d'échange (méq/g) : 1,9
. résistance électrique (dans une solution aqueuse d'acide chlorhydrique 0,1N) 0,76 $\Omega.cm^2$
. nombre de transport du nickel : 0,08
. nombre de transport des protons : 0,95

Exemple 3

On a répété l'essai de l'exemple 1, en adaptant les paramètres opératoires de manière à réaliser un taux de greffage du chlorométhylstyrène de 22 % à la deuxième étape et un taux de greffage du styrène de 12 % à la troisième étape.

La membrane obtenue a présenté les propriétés suivantes, mesurées dans les mêmes conditions expérimentales qu'à l'exemple 1

. capacité d'échange (méq/g) : 0,57
. résistance électrique (dans une solution aqueuse d'acide chlorhydrique 0,1N) 1,8 $\Omega.cm^2$
. nombre de transport du nickel : 0,002.

## Revendications

**1.** Procédé de fabrication d'une membrane ambipolaire, selon lequel on greffe, sur une feuille en un matériau polymère, un monomère comprenant au moins un radical aryle auquel on fixe des groupements fonctionnels dérivés d'acide sulfonique, carboxylique ou phosphonique, et on fixe des radicaux d'ammonium quaternaire à la feuille polymère, **caractérisé en ce qu'**on greffe le monomère comprenant un radical aryle, sur une fraction de l'épaisseur de la feuille, et **en ce que**, pour fixer les radicaux d'ammonium quaternaire à la feuille polymère, on greffe, sur une autre fraction de l'épaisseur de ladite feuille, un monomère sélectionné parmi les halogénoalkylstyrènes et les composés hétérocycliques azotés comprenant un radical alcényle, que l'on traite ensuite pour y former les radicaux d'ammonium quaternaire.

**2.** Procédé selon la revendication 1, **caractérisé en**

**ce que**, pour former les radicaux d'ammonium quaternaire, on traite le monomère sélectionné parmi les halogénoalkylstyrènes avec une amine.

3. Procédé selon la revendication 2, **caractérisé en ce qu'**on sélectionne l'amine parmi les amines tertiaires.

4. Procédé selon la revendication 3, **caractérisé en ce que** l'amine sélectionnée est la triméthylamine

5. Procédé selon l'une quelconque des revendications 1 à 4, **caractérisé en ce que** le monomère sélectionné parmi les halogénoalkylstyrène comprend du chlorométhylstyrène.

6. Procédé selon la revendication 1, **caractérisé en ce que**, pour former les radicaux d'ammonium quaternaire, on soumet le monomère sélectionné parmi les composés hétérocycliques azotés comprenant un radical alcényle, à une quaternisation.

7. Procédé selon la revendication 6, **caractérisé en ce que** la quaternisation comprend un traitement du monomère avec un acide.

8. Procédé selon la revendication 7, **caractérisé en ce que** l'acide est sélectionné parmi les hydracides.

9. Procédé selon la revendication 8, **caractérisé en ce que** l'hydracide comprend de l'acide chlorhydrique

10. Procédé selon l'une quelconque des revendications 1 et 6 à 9, **caractérisé en ce que** le monomère sélectionné parmi les composés hétérocycliques azotés comprenant un radical alcényle, comprend de la vinyl-4-pyridine

11. Procédé selon l'une quelconque des revendications 1 à 10, **caractérisé en ce qu'**on sélectionne le monomère comprenant un radical aryle, parmi les alcénylbenzènes et les (polyalcényl)benzènes.

12. Procédé selon la revendication 11, **caractérisé en ce qu'**on sélectionne le monomère comprenant un radical aryle parmi les alcénylbenzènes de formule générale

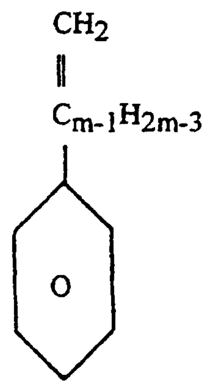

dans laquelle m désigne un nombre entier au moins égal à 2.

13. Procédé selon la revendication 12, **caractérisé en ce que** le monomère comprenant un radical aryle comprend du styrène.

14. Procédé selon l'une quelconque des revendications 1 à 13, **caractérisé en ce que** le matériau polymère de la feuille est sélectionné dans le groupe comprenant le polyéthylène, le polypropylène, le polychlorure de vinyle, le polyfluorure de vinylidène, le polytétrafluoroéthylène, les copolymères de l'éthylène et du tétrafluoroéthylène, les copolymères du propylène et du tétrafluoroéthylène, les copolymères du tétrafluoroéthylène et d'éther perfluorovinylique et les copolymères de l'hexafluoropropyléne et du tétrafluoroéthylène.

15. Procédé selon l'une quelconque des revendications 1 à 14, **caractérisé en ce que**, pour greffer le monomère cationique (respectivement anionique), on soumet la feuille à des radiations ionisantes en milieu oxygéné et on la met ensuite en présence d'une solution organique dudit monomère.

16. Procédé selon l'une quelconque des revendications 1 à 15, **caractérisé en ce qu'**on soumet les monomères à un traitement de réticulation.

17. Procédé selon la revendication 16, **caractérisé en ce que** le traitement de réticulation est effectué au moyen de divinylbenzène

## Claims

1. Process for manufacturing an ambipolar membrane, according to which a sheet of a polymer material is grafted with a monomer comprising at least one aryl radical to which is attached functional groups derived from sulphonic, carboxylic or phosphonic acid, and quaternary ammonium radicals

are attached to the polymer sheet, **characterized in that** one fraction of the thickness of the sheet is grafted with the monomer comprising an aryl radical, and **in that**, to attach the quaternary ammonium radicals to the polymer sheet, another fraction of the thickness of the said sheet is grafted with a monomer selected from haloalkylstyrenes and nitrogenous heterocyclic compounds comprising an alkenyl radical, which is then treated to form the quaternary ammonium radicals thereon.

2. Process according to Claim 1, **characterized in that**, to form the quaternary ammonium radicals, the monomer selected from haloalkylstyrenes is treated with an amine.

3. Process according to Claim 2, **characterized in that** the amine is selected from tertiary amines.

4. Process according to Claim 3, **characterized in that** the amine selected is trimethylamine.

5. Process according to any one of Claims 1 to 4, **characterized in that** the monomer selected from haloalkylstyrenes comprises chloromethylstyrene.

6. Process according to Claim 1, **characterized in that**, to form the quaternary ammonium radicals, the monomer selected from nitrogenous heterocyclic compounds comprising an alkenyl radical is subjected to a quaternization.

7. Process according to Claim 6, **characterized in that** the quaternization comprises a treatment of the monomer with an acid.

8. Process according to Claim 7, **characterized in that** the acid is selected from hydracids.

9. Process according to Claim 8, **characterized in that** the hydracid comprises hydrochloric acid.

10. Process according to any one of Claims 1 and 6 to 9, **characterized in that** the monomer selected from nitrogenous heterocyclic compounds comprising an alkenyl radical comprises 4-vinylpyridine.

11. Process according to any one of Claims 1 to 10, **characterized in that** the monomer comprising an aryl radical is selected from alkenylbenzenes and (polyalkenyl)benzenes.

12. Process according to Claim 11, **characterized in that** the monomer comprising an aryl radical is selected from the alkenylbenzenes of general formula

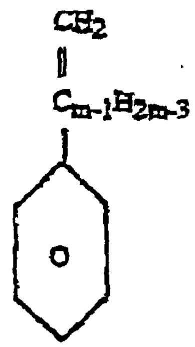

in which m denotes an integer at least equal to 2.

13. Process according to Claim 12, **characterized in that** the monomer comprising an aryl radical comprises styrene.

14. Process according to any one of Claims 1 to 13, **characterized in that** the polymer material of the sheet is selected from the group comprising polyethylene, polypropylene, polyvinyl chloride, polyvinylidene fluoride, polytetratluoroethylene, copolymers of ethylene and of tetrafluoroethylene, copolymers of propylene and of tetrafluoroethylene, copolymers of tetrafluoroethylene and of perfluorovinyl ether and copolymers of hexafluoropropylene and of tetrafluoroethylene.

15. Process according to any one of Claims 1 to 14, **characterized in that**, to graft the cationic (or anionic) monomer, the sheet is subjected to ionizing radiation in an oxygenated medium and is then placed in contact with an organic solution of the said monomer.

16. Process according to any one of Claims 1 to 15, **characterized in that** the monomers are subjected to a crosslinking treatment.

17. Process according to Claim 16, **characterized in that** the crosslinking treatment is carried out using divinylbenzene,

**Patentansprüche**

1. Verfahren zur Herstellung einer ambipolaren Membran, gemäß dem man auf eine Folie aus einem Polymermaterial ein Monomer propft, das wenigstens einen Arylrest umfasst, an dem man von Sulfonsäure, Kohlensäure oder Phosphonsäure abgeleitete funktionelle Gruppen fixiert, und man quaternäre Ammoniumreste an der Polymerfolie fixiert, **dadurch gekennzeichnet, dass** man das einen Arylrest umfassende Monomer auf einen Teil der Dicke

der Folie pfropft, und dadurch, dass man, um die quaternären Ammoniumreste an der Polymerfolie zu fixieren, auf einen anderen Teil der Dicke besagter Folie ein unter den Halogenalkylstyrenen und den stickstoffhaltigen heterocyclischen Verbindungen, die einen Alkenylrest umfassen, ausgewähltes Monomer pfropft, das man dann behandelt, um die quaternären Ammoniumreste zu bilden.

**2.** Verfahren gemäß Anspruch 1, **dadurch gekennzeichnet, dass** man, um die quaternären Ammoniumreste zu bilden, das unter den Halogenalylstyrenen ausgewählte Monomer mit einem Amin behandelt.

**3.** Verfahren gemäß Anspruch 2, **dadurch gekennzeichnet, dass** man das Amin unter den tertiären Aminen auswählt.

**4.** Verfahren gemäß Anspruch 3, **dadurch gekennzeichnet, dass** das ausgewählte Amin Trimethylamin ist.

**5.** Verfahren gemäß einem der Ansprüche 1 bis 4, **dadurch gekennzeichnet, dass** das unter den Halogenalkylstyrenen ausgewählte Monomer Chlormethylstyren umfasst.

**6.** Verfahren gemäß Anspruch 1, **dadurch gekennzeichnet, dass** man, um die quaternären Ammoniumreste zu bilden, das unter den stickstoffhaltigen heterocyclischen Verbindungen, die einen Alkenylrest umfassen, ausgewählte Monomer einer Quaternisierung unterzieht.

**7.** Verfahren gemäß Anspruch 6, **dadurch gekennzeichnet, dass** die Quaternisierung eine Behandlung des Monömers mit einer Säure umfasst.

**8.** Verfahren gemäß Anspruch 7, **dadurch gekennzeichnet, dass** die Säure unter den Wasserstoffsäuren ausgewählt ist.

**9.** Verfahren gemäß Anspruch 8, **dadurch gekennzeichnet, dass** die Wasserstoffsäure Chlorwasserstoffsäure umfasst.

**10.** Verfahren gemäß einem der Ansprüche 1 und 6 bis 9, **dadurch gekennzeichnet, dass** das unter den stickstoffhaltigen heterocyclischen Verbindungen, die einen Alkenylrest umfassen, ausgewählte Monomer Vinylpyridin umfasst.

**11.** Verfahren gemäß einem der Ansprüche 1 bis 10, **dadurch gekennzeichnet, dass** man das einen Arylrest umfassende Monomer unter den Alkenylbenzenen und den (Polyalkenyl)benzenen auswählt.

**12.** Verfahren gemäß Anspruch 11, **dadurch gekennzeichnet, dass** man das einen Arylrest umfassende Monomer unter den Alkenylbenzenen der allgemeinen Formel

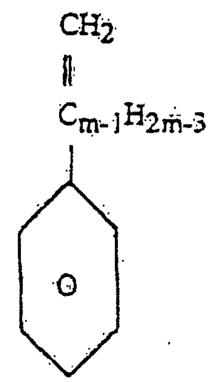

in der m eine ganze Zahl wenigstens gleich 2 bezeichnet, auswählt.

**13.** Verfahren gemäß Anspruch 12, **dadurch gekennzeichnet, dass** das einen Arylrest umfassende Monomer Styren umfasst.

**14.** Verfahren gemäß einem der Ansprüche 1 bis 13, **dadurch gekennzeichnet, dass** das Polymermaterial der Folie aus der Gruppe ausgewählt ist, die Polyethylen, Polypropylen, Polyvinylchlorid, Polyvinylidenfluorid, Polytetrafluorethylen, die Copolymere von Ethylen und Tetrafluorethylen, die Copolymere von Propylen und Tetrafluorethylen, die Copolymere von Tetrafluorethylen und Perfluorvinylether und die Copolymere von Hexafluorpropylen und Tetrafluorethylen umfasst.

**15.** Verfahren gemäß einem der Ansprüche 1 bis 14, **dadurch gekennzeichnet, dass** man, um das kationische (beziehungsweise anionische) Monomer zu pfropfen, die Folie in einem Sauerstoffmedium Ionenstrahlung unterwirft und man sie dann in die Gegenwart einer organischen Lösung besagten Monomers bringt.

**16.** Verfahren gemäß einem der Ansprüche 1 bis 15, **dadurch gekennzeichnet, dass** man die Monomere einer Vernetzungsbehandlung unterzieht.

**17.** Verfahren gemäß Anspruch 16, **dadurch gekennzeichnet, dass** die Vernetzungsbehandlung mittels Divinylbenzen ausgeführt wird.

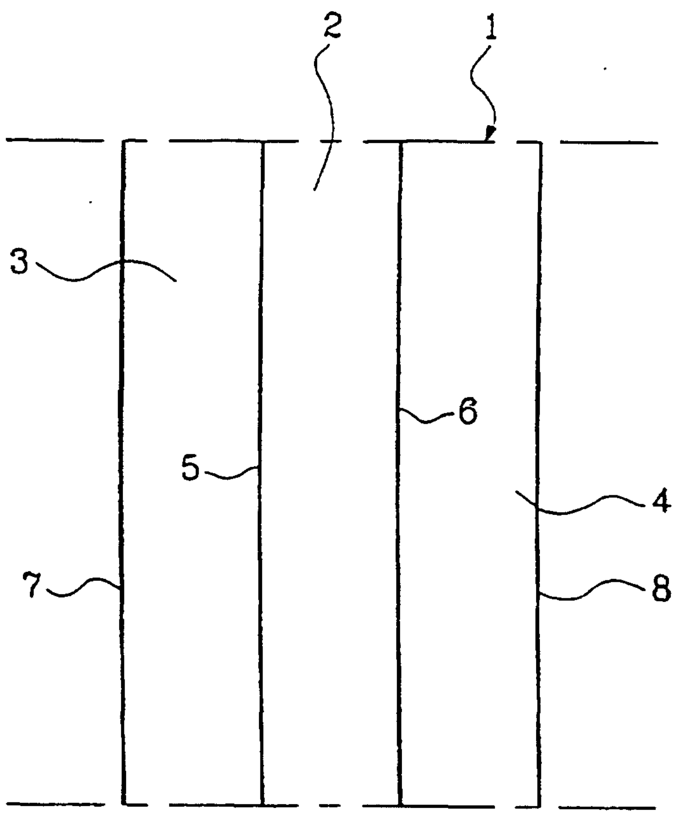
2
1
3
6
5
4
7
8